# EUROPÄISCHE PATENTSCHRIFT

(11) **EP 2 614 230 B1**
(45) Veröffentlichungstag und Bekanntmachung des Hinweises auf die Patenterteilung: **22.10.2014**
(21) Anmeldenummer: 11736068.5
(22) Anmeldetag: 20.07.2011
(51) Int. Cl.: F01N 3/20

(54) **ABGASNACHBEHANDLUNGSSYSTEM UND VERFAHREN ZUR EINDOSIERUNG EINES MEDIUMS IN DEN ABGASSTRANG EINER BRENNKRAFTMASCHINE**
EXHAUST GAS TREATMENT SYSTEM AND METHOD FOR DOSING AN ADDITIVE IN THE EXHAUST PIPE OF AN INTERNAL COMBUSTION ENGINE
SYSTEME DE POST-TRAITEMENT DE GAZ D'ECHAPPEMENT ET METODE DE DOSAGE D'UN AGENT DANS LE FLUX DE GAZ D'ÉCHAPPEMENT D'UN MOTEUR À COMBUSTION INTERNE

(30) Priorität: 09.09.2010 DE 102010040453
(43) Veröffentlichungstag der Anmeldung: 17.07.2013
(73) Patentinhaber: Robert Bosch GmbH, 70442 Stuttgart (DE)
(72) Erfinder: OFFENHUBER, Michael, A-5421 Adnet (AT)
(86) Internationale Anmeldenummer: PCT/EP2011/062404
(87) Internationale Veröffentlichungsnummer: WO 2012/031810

(56) Entgegenhaltungen:
- EP-A2- 0 928 884
- WO-A1-2011/088926
- DE-A1-102008 000 272
- DE-A1-102008 000 932

## Beschreibung

### Stand der Technik

Die Erfindung geht aus von einem Abgasnachbehandlungssystem und einem Verfahren zur Eindosierung eines Mediums in den Abgasstrang einer Brennkraftmaschine nach der Gattung der unabhängigen Ansprüche.

Bei der Verbrennung eines Luft-Kraftstoff-Gemisches in einer Brennkraftmaschine entstehen als Nebenprodukte schädlich Stickoxide, Rußpartikel, Kohlenstoffmonoxid und unverbrannte Kohlenwasserstoffe. Die Einführung immer strengerer Emissionsstandards hat dazu geführt, dass zur Einhaltung der Emissionsgesetzgebung neben innermotorischen Maßnahmen zur Emissionsreduktion die Abgasnachbehandlung von Brennkraftmaschinen eine hohe Bedeutung gewonnen hat. Dabei werden zur Abgasnachbehandlung beispielsweise Katalysatoren zur Oxidation nicht verbrannter Kohlenwasserstoffe, Rußpartikelfilter und Katalysatoren zur Reduktion von Stickoxiden eingesetzt.

Zur Unterstützung der Abgasnachbehandlung werden Medien, beispielsweise wässrige Harnstofflösungen oder Kraftstoff, in den Abgasstrang der Brennkraftmaschine eindosiert. Aus der EP 0928 884 A2 und DE 44 36 397 B4 ist eine Einrichtung zur Nachbehandlung von Abgasen bekannt, bei dem ein Reduktionsmittel aus einem Vorratsbehälter in den Abgasstrang einer Brennkraftmaschine eindosiert wird, wobei der Vorratsbehälter für das Reduktionsmittel durch eine Druckluftquelle unter Druck gesetzt wird. Das Druckniveau des Vorratsbehälters wird dabei sowohl genutzt, um das Reduktionsmittel vom Vorratsbehälter in den Abgasstrang zu fördern, als auch um eine feine Verteilung des Mediums bei der Eindosierung in den Abgasstrang zu erreichen.

### Vorteile der Erfindung

Das erfindungsgemäße Abgasnachbehandlungssystem sowie das erfindungs-gemäße Verfahren zur Eindosierung eines Mediums in den Abgasstrang einer Brennkraftmaschine mit den Merkmalen der unabhängigen Ansprüche bieten demgegenüber den Vorteil, dass Druckzuführmittel vorgesehen sind, die das Medium im zweiten Tank mittels eines unter Druck stehenden Hilfsfluids mit Druck beaufschlagen, so dass das Medium aus dem zweiten Tank in den Abgasstrang eindosiert wird, und dass Ermittlungsmittel vorgesehen sind, die prüfen, ob das Medium im zweiten Tank einen vorgegebenen Füllstand unterschreitet und dass Befüllungsmittel vorgesehen sind, die den zweiten Tank abhängig vom Prüfergebnis der Ermittlungsmittel vom ersten Tank aus befüllen. Vorteilhaft ist dabei, dass insbesondere der zweite Tank im Vergleich zum Stand der Technik deutlich kleiner ausgeführt werden kann. Dabei kann der erste Tank deutlich einfacher ausgeführt werden, weil dieser Tank nicht druckfest ausgeführt werden muss. Zudem erhält man bei dieser Ausführungsform einen weiteren Freiheitsgrad bei der Positionierung, so dass der erste Tank beispielsweise besonders gut zugänglich und der zweite Tank in einer günstiger Position nahe dem Abgasstrang positioniert werden kann. Die Anordnung von Ermittlungsmitteln am zweiten Tank und die Abhängigkeit der Befüllung des zweiten Tanks aus dem ersten Tank vom Ergebnis der Ermittlungsmittel ermöglichen dabei ein automatisiertes Nachfüllen des zweiten Tanks.

An dem zweiten Tank sind mindestens zwei getrennte Kammern ausgebildet. Dadurch kann beispielsweise ein Kammer des zweiten Tanks befüllt werden, während aus der anderen Kammer des zweiten Tanks Medium in den Abgasstrang eindosiert wird.

Durch die in den Unteransprüchen aufgeführten Maßnahmen sind vorteilhafte Weiterbildungen und Verbesserungen des im Hauptanspruch angegebenen Abgasnachbehandlungssystems und Verfahrens zur Eindosierung eines Mediums in den Abgasstrang einer Brennkraftmaschine möglich.

Dabei ist es besonders günstig, wenn die Druckzuführmittel mindestens zwei der getrennten Kammern des zweiten Tanks unabhängig voneinander durch das Hilfsfluid unter Druck setzen. Dadurch können in den beiden Kammern des zweiten Tanks unterschiedliche Druckniveaus eingestellt werden. So kann in der ersten Kammer des zweiten Tanks beispielsweise ein Druckniveau unterhalb des Drucks im ersten Tank eingestellt werden, so dass das Medium aufgrund eines Druckgefälles aus dem ersten Tank in den zweiten Tank strömt und die zweite Kammer mit einem Druck beaufschlagt werden, mit dem das Medium in den Abgasstrang der Brennkraftmaschine eindosiert wird.

Eine Weiterbildung der Erfindung ist mit dem Vorteil versehen, dass an jeder Kammer des zweiten Tanks jeweils ein Druckzuführventil für das Hilfsfluid, ein Einlassventil für das Medium und ein Auslassventil für das Medium angeordnet ist. Durch je ein Ein- und Auslassventile pro Kammer des zweiten Tanks sowie jeweils ein Druckzuführventil kann der Zufluss von Medium und Hilfsfluid sowie der Abfluss des Mediums aus den einzelnen Kammern des zweiten Tanks individuell gesteuert oder geregelt werden. Beispielsweise können in den Kammern des zweiten Tanks auch zwei unterschiedliche Druckniveaus zur Eindosierung des Mediums in den Abgasstrang eingestellt werden.

Eine vorteilhafte Weiterbildung des Abgasnachbehandlungssystems besteht darin, dass der erste Tank in ein erstes Segment und ein zweites Segment unterteilt ist, wobei zwischen dem ersten Segment und dem zweiten Segment ein Ventil, insbesondere ein Rückschlagventil angeordnet ist, welches ein Strömen des Mediums aus dem zweiten Segment in das erste Segment unterbindet. Vorteilhaft ist dabei, wenn der erste Tank so aufgebaut ist, dass das zweite Segment mittels Schwerkraft aus dem ersten Segment befüllt wird. Durch die Unterteilung des ersten Tanks kann beispielsweise ein Schwappen des Mediums im Tank minimiert werden, wodurch die Zulaufbedingungen vom ersten Tank zum zweiten Tank weitestgehend gleich gehalten werden können.

Eine besonders vorteilhafte Weiterbildung besteht darin, dass am zweiten Segment des ersten Tanks ein Druckversorgungsventil angeordnet ist, mit dem das zweite Segment des ersten Tanks unter Druck gesetzt werden kann. Damit kann das zweite Segment des ersten Tanks mit einem kleinen Überdruck beaufschlagt werden, der das Medium aus dem zweiten Segment in eine Kammer des zweiten Tanks fördert. Nach dem Befüllen des zweiten Tanks wird der Überdruck weggeschaltet und das zweite Segment kann vom ersten Segment des ersten Tanks befüllt werden.

Eine weitere vorteilhafte Weiterbildung des Abgasnachbehandlungssystems besteht darin, dass das Medium aus dem ersten Tank in den zweiten Tank strömt, wenn die Druckzuführmittel die Zufuhr des Hilfsfluids zum zweiten Tank sperren. Wird die Zufuhr des Hilfsfluids zu einer Kammer des zweiten Tanks gesperrt, wird die entsprechende Kammer drucklos und das Medium kann aus dem ersten Tank in die entsprechende Kammer des zweiten Tanks strömen. Dabei kann zur Förderung des Mediums auf zusätzlichen Fördermittel verzichtet werden, wenn der erste Tank oder ein Segment des ersten Tanks mit leichtem Überdruck beaufschlagt werden.

Ein weitere vorteilhafte Weiterbildung des Abgasnachbehandlungssystems zeichnet sich dadurch aus, dass in einem ersten Betriebszustand eine Eindosierung des Mediums aus der ersten Kammer des zweiten Tanks mittels des unter Druck stehenden Hilfsfluids erfolgt, während die zweite Kammer des zweiten Tanks aus dem ersten Tank befüllt wird und dass in einem zweiten Betriebszustand eine Eindosierung des Mediums aus der zweiten Kammer des zweiten Tanks mittels des unter Druck stehenden Hilfsfluids erfolgt, während die erste Kammer des zweiten Tanks aus dem ersten Tank mit dem Mediums befüllt wird. Diese Ausgestaltung bietet den Vorteil, dass parallel ein drucklose Kammer des zweiten Tanks aus dem ersten Tank befüllt werden kann und die das Medium aus der anderen Kammer des zweiten Tanks in den Abgasstrang eindosiert werden kann. Somit wird ein Leerlaufen des zweiten Tanks verhindert.

Besonders günstig ist eine Ausführungsform des Abgasnachbehandlungssystems, bei der zwischen dem zweiten Tank und dem Abgasstrang eine Mischkammer zur Vermischung von dem Medium und dem Hilfsfluid angeordnet ist. Dabei kann das Medium stromabwärts des zweiten Tanks mit dem Hilfsfluid vermischt werden, wobei das Hilfsfluid die Zerstäubung des Mediums unterstützt. Auf diese Weise können kleinste Mengen des Mediums in den Abgasstrang eindosiert werden.

### Zeichnungen

Fig. 1 zeigt ein Abgasnachbehandlungssystem in schematischer Darstellung.
Fig. 2 zeigt ein Ausführungsbeispiel des erfindungsgemäßen Abgasnachbehandlungssystems in schematischer Darstellung.
Fig. 3 zeigt eine alternative Ausführungsform des erfindungsgemäßen Abgasnachbehandlungssystems in schematischer Darstellung.

### Kurze Beschreibung der Ausführungsbeispiele

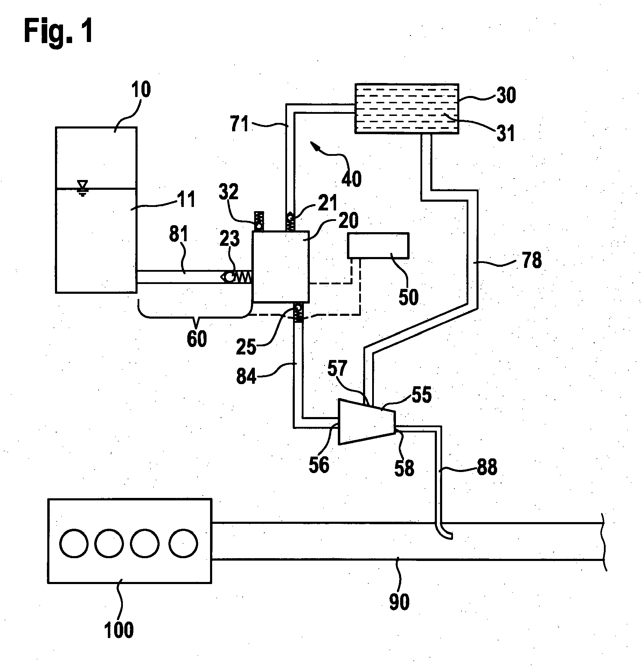

In Fig. 1 ist ein Abgasnachbehandlungssystem in schematischer Darstellung gezeigt. Dabei umfasst das Abgasnachbehandlungssystem einen mit einem Medium 11 befüllbaren ersten Tank 10, welcher über eine Leitung 81 mit einem zweiten Tank 20 verbunden ist, wobei zwischen einem dem zweiten Tank 20 zugewandten Ende der Leitung 81 und dem zweiten Tank 20 ein Einlassventil 23 des zweiten Tanks 20 angeordnet ist. An den zweiten Tank 20 sind Druckzuführmittel 40 angeschlossen, welche eine Versorgungsleitung 71, einen mit einem Hilfsfluid 31 befüllten Vorratsbehälter 30 und ein Druckzuführventil 21 umfassen. Dabei ist der zweite Tank 20 über die Versorgungsleitung 71 mit einem mit Hilfsfluid 31 befüllten Vorratsbehälter 30 verbunden. Zwischen einem dem zweiten Tank 20 zugewandten Ende der Versorgungsleitung 71 und dem zweiten Tank 20 ist ein Druckzuführventil 21 angeordnet. Über ein am zweiten Tank 20 angeordnetes Auslassventil 25 und eine Leitung 84 ist der zweite Tank 20 mit einem Eingang 56 einer Mischkammer 55 verbunden. Zusätzlich ist an der Mischkammer 55 ein weiterer Eingang 57 ausgebildet, wobei an dem weiteren Eingang 57 eine Versorgungsleitung 78 angeschlossen ist, welche mit dem Vorratsbehälter 30 verbunden ist. Die Mischkammer 55 weist einen Ausgang 58 auf, von dem eine Leitung 88 in einen Abgasstrang 90 einer Brennkraftmaschine 100 führt. Zusätzlich sind am zweiten Tank 20 Ermittlungsmittel 50 angeordnet, welche einen Füllstand des Mediums 11 im zweiten Tank 20 ermitteln können. Die Ermittlungsmittel 50 steuern Befüllungsmitteln 60, welche in diesem Ausführungsbeispiel die Leitung 81 und das Einlassventil 23 umfassen, welche eine Befüllung des zweiten Tanks 20 aus dem ersten Tank 10 ermöglichen. Dazu ist am zweiten Tank 20 ein Entlüftungsventil 32 angeordnet, über das der Druck im zweiten Tank 20 abgebaut werden kann, um eine Befüllung des zweiten Tanks 20 aus dem ersten Tank 10 zu ermöglichen.

Der zweite Tank 20 wird im Ausgangszustand durch die Befüllungsmittel 60 aus dem ersten Tank 10 mit einem Medium 11 befüllt. Dabei strömt das Medium 11 durch die Leitung 81 und das Einlassventil 23 in den zweiten Tank 20. Wird ausgehend von diesem Ausgangszustand der zweite Tank 20 durch die Druckzuführmittel 40 mit Druck beaufschlagt, schließt das Einlassventil 23 und es baut sich im zweiten Tank 20 ein Druck auf. Erreicht oder übersteigt der Druck im zweiten Tank 20 einen Schwellenwert, öffnet das Auslassventil 25 und gibt einen Zufluss des Mediums 11 in die Mischkammer 55 frei. In der Mischkammer 55 vermischen sich das über die Leitung 84 und den Eingang 56 zugeführte Medium 11 und das über die Versorgungsleitung 78 und den weiteren Eingang 57 zugeführte Hilfsfluid 31. Über den Ausgang 58 und die Leitung 88 wird das mit dem Hilfsfluid 31 vermischte Medium 11 in den Abgasstrang 90 der Brennkraftmaschine 100 eindosiert. Nach Beendigung der Eindosierung des Mediums 11 in den Abgasstrang 90 der Brennkraftmaschine 100 kann der Druck im zweiten Tank 20 über das Entlüftungsventil 32 abgebaut werden, bis der zweite Tank 20 drucklos ist. Somit kann der zweite Tank 20 mit dem Medium 11 aus dem ersten Tank 10 wieder durch die Befüllungsmittel 60 befüllt werden.

Alternativ können in einer besonders einfachen Ausführungsform auch die Mischkammer 55 sowie die Verbindungsleitung 78 entfallen, wobei das Medium 11 direkt aus dem zweiten Tank 20 über das Auslassventil 25 und die Leitung 84, 88 in den Abgasstrang 90 der Brennkraftmaschine 100 eindosiert wird.

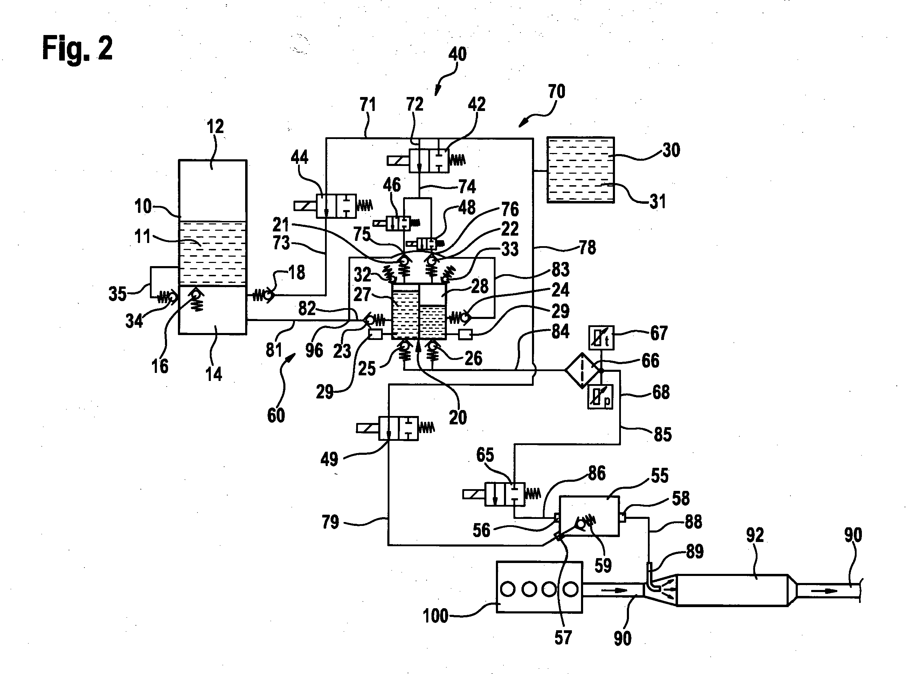

In Fig 2. ist ein Ausführungsbeispiel des erfindungsgemäßen Abgasnachbehandlungssystems dargestellt. Dabei ist der ersten Tank 10 in ein erstes Segment 12 und ein zweites Segment 14 unterteilt, wobei zwischen dem ersten Segment 12 und dem zweiten Segment 14 ein Rückschlagventil 16 angeordnet ist. Am zweiten Segment 14 ist ein Entlüftungsventil 34 angeordnet, über welches des zweite Segment 14 über die Entlüftungsleitung 35 mit dem ersten Segment 12 des ersten Tanks 10 verbunden ist. Das zweite Segment 14 des ersten Tanks 10 ist über ein Leitungssystem 80, welches Leitungen 81, 82, 83 zwischen ersten und zweiten Tank umfasst, mit dem zweiten Tank 20 verbunden. Der zweite Tank 20 umfasst eine erste Kammer 27 und eine zweite Kammer 28. Dabei führt die Leitung 81 vom zweiten Segment 14 des ersten Tanks 10 zu einem Verzweigungspunkt 96, der über die Leitung 82 mit der ersten Kammer 27 des zweiten Tanks verbunden ist, wobei zwischen einem der ersten Kammer 27 zugewandten Ende der Leitung 82 und der ersten Kammer 27 ein Einlassventil 23 angeordnet ist. Von dem Verzweigungspunkt 96 führt eine Leitung 83 zur zweiten Kammer 28 des zweiten Tanks 20, wobei zwischen einem der zweiten Kammer 28 zugewandten Ende der Leitung 83 und der zweiten Kammer 28 ein Einlassventil 24 angeordnet ist.

Der zweite Tank 20 kann über Druckzuführmittel 40 mit Druck beaufschlagt werden, wobei die Druckzuführmittel 40 ein Versorgungsleitungssystem 70, Druckregulierungsmittel 41 sowie den mit Hilfsfluid 31 befüllten Vorratsbehälter 30 umfassen. Die Druckregulierungsmittel 41 umfassen Druckregelventile 42, 44, 46, 48, sowie Druckzuführventile 21, 22 zu der ersten Kammer 27 und zu der zweiten Kammer 28 des zweiten Tanks 20. Zusätzlich sind an der ersten Kammer 27 des zweiten Tanks 20 das Entlüftungsventil 32 und an der zweiten Kammer 28 des zweiten Tanks das Entlüftungsventil 33 angeordnet. Über die Entlüftungsventile 32, 33 kann die jeweilige Kammer 27,28 des zweiten Tanks 20 nachdem sind mit Druck beaufschlagt wurde wieder in einen drucklosen Ausgangszustand versetzt werden.

Der Vorratsbehälter 30 ist über eine erste Versorgungsleitung 71 mit einem Druckregelventil 44 verbunden. Das Druckregelventil 44 ist über eine zweite Versorgungsleitung 73 mit einem am zweiten Segment 14 des ersten Tanks 10 angeordneten Druckversorgungsventil 18 verbunden, womit das zweite Segment 14 des ersten Tanks 10 durch das Hilfsfluid 31 unter Druck gesetzt werden kann.

Der Vorratsbehälter 30 ist ferner über eine, von der Leitung 71 abzweigende, dritte Leitung 72 mit einem Druckregelventil 42 verbunden. Alternativ kann der Vorratsbehälter 30 auch direkt über die Leitung 72 mit dem Druckregelventil 42 verbunden sein. Von dem Druckregelventil 42 führt eine sich teilende vierte Versorgungsleitung 74 zu zwei weiteren Druckregelventilen 46, 48. Dabei ist das Druckregelventil 46 über eine Verbindungsleitung 75 und das Druckzuführventil 21 mit der ersten Kammer 27 des zweiten Tanks 20 verbunden. Das Druckregelventil 48 ist über eine Verbindungsleitung 76 und ein weiteres Druckzuführventil 22 mit der zweiten Kammer 28 des zweiten Tanks 20 verbunden. An jeder der beiden Kammern 27, 28 ist ein Mittel 29 zur Füllstandsmessung des Mediums 11 in der jeweiligen Kammer 27, 28 des zweiten Tanks 20 angeordnet.

Über das an der ersten Kammer 27 des zweiten Tanks 20 angeordnete Auslassventil 25 bzw. das an der zweiten Kammer 28 des zweiten Tanks 20 angeordneten Auslassventil 26 und die Leitung 84 ist der zweite Tank 20 mit einem Filter 66 verbunden, wobei an dem Filter 66 ein Temperatursensor 67 und ein Drucksensor 68 zur Messung von Temperatur und Druck des Mediums 11 angeordnet sind. Alternativ sind jedoch auch Ausführungsformen möglich, welche weder den Temperatursensor 67 noch den Drucksensor 68 bzw. nur den Temperatursensor 67 oder den Drucksensor 68 aufweisen. Der Filter 66 ist über die Leitung 85 mit einem Einspritzventil 65 verbunden. Von dem Einspritzventil 65 führt eine Leitung 86 zu dem Eingang 56 der Mischkammer 55. Zusätzlich ist an der Mischkammer 55 der weitere Eingang 57 ausgebildet, welcher über eine Versorgungsleitung 79 mit einem Druckregelventil 49 verbunden ist. Dabei reguliert das Druckregelventil 49 den Zustrom des Hilfsfluids 31 durch die Versorgungsleitung 78 aus dem Vorratsbehälter 30 zur Mischkammer 55. An der Mischkammer 55 ist ferner ein Rückschlagventil 59 angeordnet, welches ein Rückströmen aus der Mischkammer 55 in die Versorgungsleitung 79 unterbindet. Über den Ausgang 58 ist die Mischkammer 55 mit der Leitung 88 verbunden, an deren dem Abgasstrang 90 zugewandten Ende ein Dosierrohr 89 zur Eindosierung des Mediums 11 in den Abgasstrang 90 angeordnet. Dabei ist das Dosierrohr 89 im Abgasstrang 90 zwischen der Brennkraftmaschine 100 und einer Abgasnachbehandlungseinrichtung 92 angeordnet.

Im Ausgangszustand sind beide Kammern 27,28 des zweiten Tanks 20 drucklos. Die erste Kammer 27 des zweiten Tanks wird durch das geöffnete Einlassventil 23 aus dem zweiten Segment 14 des ersten Tanks 10 mit dem Medium 11 befüllt, indem das zweite Segment 14 über die Leitungen 71,73 und das Druckzuführventil 18 mit dem Hilfsfluid 31 unter Druck gesetzt wird, wobei das Rückschlagventil 16 ein Strömen des Mediums 11 aus dem zweiten Segment 14 in das erste Segment 12 des ersten Tanks unterbindet. Bei dem Hilfsfluid 31 handelt es sich bevorzugt um ein Gas, beispielsweise Druckluft und bei dem Medium 11 um eine Flüssigkeit, beispielsweise wässrige Harnstofflösung oder Kraftstoff. Die Befüllung der zweiten Kammer 28 des zweiten Tanks erfolgt analog über das Einlassventil 24 und die Verbindungsleitungen 81, 83 aus dem ersten Tank 10.

Durch Ansteuerung des Druckregelventils 46 erhöht sich der Druck des Hilfsmediums 31 in der Versorgungsleitung 75, wodurch das Druckzuführventil 21 an der ersten Kammer 27 des zweiten Tanks 20 öffnet. Durch diese Ansteuerung wird die erste Kammer 27 des zweiten Tanks 20 mit einem Druck beaufschlagt, der größer ist als der Druck im zweiten Segment 14 des ersten Tanks. Dabei schließt das Einlassventil 23 an der ersten Kammer 27 des zweiten Tanks 20, wodurch der Druck in der ersten Kammer 27 des zweiten Tanks 20 weiter steigt. Erreicht oder übersteigt der Druck in der ersten Kammer 27 des zweiten Tanks 20 einen Schwellenwert, öffnet das Auslassventil 25 an der ersten Kammer 27 des zweiten Tanks, wobei das Medium 11 über die Leitung 84 durch den Filter 66 und durch die Leitung 85 zum Einspritzventil 65 strömt. Am Filter 66 sind der Temperatursensor 67 und der Drucksensor 68 angeordnet, welche Temperatur und Druck des Mediums 11 messen.

Wird das Einspritzventil 65 angesteuert, strömt das Medium 11 über die Leitung 86 und den Eingang 56 in die Mischkammer 55. In Abhängigkeit der durch den Temperatursensor 67 gemessenen Temperatur und des durch den Drucksensor 68 gemessenen Drucks kann die Zufuhr des Hilfsfluid 31 durch den Eingang 57 zur Mischkammer 55 über das Druckregelventil 49 gesteuert werden. In der Mischkammer 55 vermischen sich das Medium 11 und das Hilfsfluid 31, wobei ein Rückströmen in die Leitung 79 durch das Rückschlagventil 59 unterbunden wird. Über den Ausgang 58 der Mischkammer 55 gelangt ein Gemisch aus dem Medium 11 und dem Hilfsfluid 31 durch die Leitung 88 zum Dosierrohr 89, wo es zwischen der Brennkraftmaschine 100 und der Abgasnachbehandlungsvorrichtung 92 in den Abgasstrang 90 der Brennkraftmaschine eindosiert wird.

Signalisiert das Mittel 29 zur Füllstandsmessung an der ersten Kammer 27 des zweiten Tanks 20 ein Unterschreiten eines als minimal zulässig definierten Füllstands des Mediums 11 in der ersten Kammer 27 des zweiten Tanks 20, wird die erste Kammer 27 drucklos geschaltet, indem das Druckregelventil 46 die Zufuhr des Hilfsfluids 31 drosselt und das Druckzuführventil 21 schließt. Zusätzlich kann der Druck in der ersten Kammer 27 durch Ansteuerung des Entlüftungsventils 32 abgebaut werden. Ist die erste Kammer 27 drucklos, öffnet das Einlassventil 23 der ersten Kammer 27 des zweiten Tanks 20 und die erste Kammer 27 wird aus dem zweiten Segment 14 des ersten Tanks 10 wieder mit dem Medium 11 befüllt. Um während des Befüllungsvorgangs eine Eindosierung des Mediums 11 zu ermöglichen, wird nach dem drucklos Schalten der ersten Kammer 27 des zweiten Tanks 20 die zweite Kammer 28 des zweiten Tanks 20 über das Druckregelventil 48 mit Druck beaufschlagt, so dass die Eindosierung des Mediums 11 in den Abgasstrang 90 aus der zweiten Kammer 28 des zweiten Tanks 20 analog dem für die erste Kammer 27 des zweiten Tanks 20 beschriebenen Ablaufs erfolgt.

Wird die Zufuhr des Hilfsmediums 11 zum zweiten Segment durch das Druckregelventil 44 unterbunden oder so stark gedrosselt, dass das Druckversorgungsventil 18 schließt, wird das zweite Segment 14 des ersten Tanks 10 drucklos. Das zwischen dem ersten Segment 12 und dem zweiten Segment 14 des ersten Tanks 10 angeordnete Rückschlagventil 16 öffnet und das zweite Segment 14 des ersten Tanks 10 kann mittels Schwerkraft aus dem erste Segment 12 mit Medium 11 befüllt werden. Alternativ kann die Befüllung des zweiten Segments 12 aus dem ersten Segment 14 auch über ein Fördermittel, beispielsweise eine Pumpe erfolgen.

Der Vorratsbehälter 30 für das Hilfsfluid 31 ist insbesondere ein nicht dargestellter Druckluftkreislauf eines Nutzfahrzeuges, welcher beispielsweise ein Druckniveau von 12 bar aufweist. Um den Druck auf den zweiten Tank 20 zu reduzieren ist zwischen den Druckregelventilen 46, 48 für die jeweiligen Kammern 27, 28 des zweiten Tanks 20 und dem Vorratsbehälter das Druckregelventil 42 angeordnet, welches das Druckniveau des Vorratsbehälters 30, beispielsweise 12 bar, auf ein vermindertes Druckniveau, beispielsweise 3 bar, reduziert. Alternativ zu dem Druckregelventil 42 kann diese Funktion auch durch eine Drossel, insbesondere durch eine verstellbare Drossel, erfüllt werden. In einer weiteren alternativen Ausführung kann das Druckregelventil 42 auch entfallen, beispielsweise wenn das Druckniveau des Hilfsfluids 31 im Vorratsbehälter 30 niedrig ist oder der Druck des Hilfsfluids 31 durch die Druckregelventile 46, 48, insbesondere auch im geöffneten Zustand der Druckregelventils 46, 48, entsprechend reduziert wird.

In einer vereinfachten Ausführungsform können der Filter 66, der Temperatursensor 67 und/oder der Drucksensor 68 entfallen. In einer weiteren Ausführungsform können der Temperatursensor 67 und/oder der Drucksensor 68 auch an anderen Stellen zwischen den Kammern 27, 28 des zweiten Tanks 20 und dem Einspritzventil 65, insbesondere an den Kammern 27, 28 oder am Einspritzventil 65 angeordnet sein. Anstelle eines gemeinsamen Versorgungsleitungssystems 70, welches die Versorgungsleitungen 71 - 79 für das Hilfsfluid 31 umfasst, können auch ein oder mehrere der Druckregelventile 42, 44, 46, 48, 49 über gesonderte Versorgungsleitungen, insbesondere direkt, mit dem Vorratsbehälter 30 verbunden sein.

Alternativ zur dargestellten Ausführungsform kann die Eindosierung des Mediums 11 aus dem zweiten Tank 20, insbesondere beginnend vom drucklosen Ausgangszustand, auch aus der zweiten Kammer 28 des zweiten Tanks 20 beginnen, wenn diese zweite Kammer 28 zunächst mit Druck durch das Hilfsfluid 31 beaufschlagt wird und die erste Kammer 27 des zweiten Tanks 20 zunächst drucklos bleibt. Alternativ dazu können auch beide Kammern 27, 28 des zweiten Tanks mit Druck beaufschlagt werden, insbesondere dann, wenn der Schwellenwert, ab welchem die Auslassventile 25, 26 an den Kammern 27, 28 des zweiten Tanks öffnen derart festgelegt wird, dass ein leichter Überdruck, beispielsweise 2bar nicht ausreicht, um die Auslassventile 25, 26 zu öffnen. Durch diese Ausgestaltung kann die Eindosierung des Mediums 11 mit höheren Drücken erfolgen, was im Allgemeinen zu einer feineren Zerstäubung des Mediums 11 im Abgasstrang 90 führt.

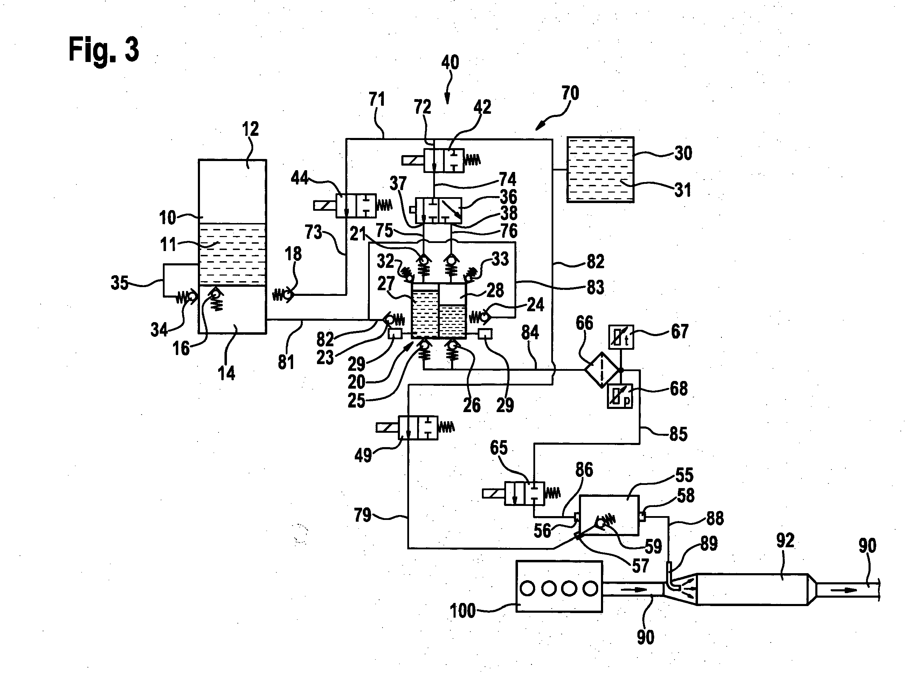

In Fig. 3 ist eine weitere, alternative Ausführungsform des Abgasnachbehandlungs-systems gezeigt, bei dem die Druckregulierung für die beiden Kammern 27, 28 des zweiten Tanks 20 über ein sogenanntes 3/2-Wege-Ventil 36 erfolgt. Dabei ist der Vorratsbehälter 30 über die Versorgungsleitungen 71 und 72 mit dem Druckregelventil 42 verbunden. Das Druckregelventil 42 ist über die Versorgungsleitung 74 mit dem 3/2-Wege-Ventil 36 verbunden, welches mit einem Ausgang 37 über die Versorgungsleitung 75 und das Druckzuführventil 21 mit der ersten Kammer 27 des zweiten Tanks 20, und mit einen weiteren Ausgang 38 über die Versorgungsleitung 76 und das Druckzuführventil 22 mit der zweiten Kammer 28 des zweiten Tanks 20 verbunden ist.

Der Druck des Hilfsfluids 31 in der Versorgungsleitung 74 wird über das Druckregelventil 42 eingestellt. Mit diesem Druck kann über das 3/2-Wege-Ventil 36 entweder über die Leitung 75 und das Druckzuführventil 21 die erste Kammer 27 des zweiten Tanks 20 oder über die Leitung 76 und das Druckzuführventil 22 die zweite Kammer 28 des zweiten Tanks 20 mit Druck beaufschlagt werden, wobei die jeweils andere Kammer nicht mit dem Hilfsfluid 31 mit Druck beaufschlagt wird.

Im Ausgangszustand ist das 3/2-Wege-Ventil 36 so geschaltet, dass das Hilfsfluid 31 durch die Leitung 75 zur ersten Kammer 27 des zweiten Tanks 20 strömt und diese erste Kammer 27 mit Druck beaufschlagt. Dadurch wird das Medium 11 in der beschriebenen Form über das Auslassventil 25 in den Abgasstrang 90 der Brennkraftmaschine 100 eindosiert. Unterschreitet der durch die Mittel 29 zur Füllstandsmessung ermittelte Füllstand des Mediums 11 in der ersten Kammer 27 einen als minimal zulässig definierten Füllstand, schaltet das 3/2-Wege-Ventil die Zufuhr des Hilfsmediums 31 auf die zweite Kammer 28 des zweiten Tanks 20, während die nun drucklose erste Kammer 27 in beschriebener Weise aus dem ersten Tank 10 mit Medium 11 befüllt wird. Signalisiert das Mittel 29 zur Füllstandsmessung an der zweiten Kammer 28 des zweiten Tanks 20 ein Unterschreiten eines als minimal zulässig definierten Füllstands des Mediums 11 in der zweiten Kammer 28 des zweiten Tanks 20, schaltet das 3/2-Wege-Ventil 36 die Zufuhr des Hilfsfluids 31 wieder auf die erste Kammer 27 des zweiten Tanks 20. Um beide Kammern 27, 28 des zweiten Tanks 20 drucklos zu schalten, kann die Zufuhr des Hilfsmediums 31 zum zweiten Tank 20 unterbrochen werden, wobei das Druckregelventil 42, bevorzugt im stromlosen Zustand des Druckregelventils 42, die Zufuhr des Hilfsmediums 31 zu beiden Kammern 27, 28 des zweiten Tanks 20 sperrt. Die Unterbrechung der Druckzufuhr durch das Hilfsmedium 31 zum zweiten Tank 20 bietet den Vorteil, dass der zweite Tank 20 bei einer unterbrochener Stromversorgung, insbesondere bei abgestellter Brennkraftmaschine 100, nicht unter Druck steht, wodurch eine mechanische Belastung durch den Druck des Hilfsfluids 31 auf den zweiten Tanks 20 reduziert ist.

## Patentansprüche

1. Abgasnachbehandlungssystem zum Eindosieren eines Mediums (11), insbesondere flüssiger Harnstofflösung oder Kraftstoff, in den Abgasstrang (90) einer Brennkraftmaschine (100), mit einem ersten Tank (10) und einem damit verbundenen zweiten Tank (20) zur Aufnahme des Mediums (11), wobei Druckzuführungsmittel (40) vorgesehen sind, die das Medium (11) im zweiten Tank (20) mittels eines unter Druck stehenden Hilfsfluids (31) mit Druck beaufschlagen, so dass das Medium (11) aus dem zweiten Tank (20) in den Abgasstrang (90) eindosiert wird, und wobei Ermittlungsmittel (50) vorgesehen sind, die prüfen, ob das Medium (11) im zweiten Tank (20) einen vorgegebenen Füllstand unterschreitet, und wobei Befüllungsmittel (60) vorgesehen sind, die den zweiten Tank (20) abhängig vom Prüfergebnis der Ermittlungsmittel (50) vom ersten Tank (10) aus befüllen, **dadurch gekennzeichnet, dass** an dem zweite Tank (20) mindestens 2 getrennte Kammern (27,28) ausgebildet sind.

2. Abgasnachbehandlungssystem nach Anspruch 1, **dadurch gekennzeichnet, dass** die Druckzuführmittel (40) mindestens zwei der getrennten Kammern (27, 28) des zweiten Tanks (20) unabhängig voneinander durch das Hilfsfluid (31) unter Druck setzen.

3. Abgasnachbehandlungssystem nach einem der Ansprüche 1 oder 2, **dadurch gekennzeichnet, dass** an jeder Kammer (27, 28) des zweiten Tanks jeweils ein Druckzuführventil (21, 22) für das Hilfsfluid (31), ein Einlassventil (23, 24) für das Medium (11) und ein Auslassventil (25, 26) für das Medium angeordnet ist.

4. Abgasnachbehandlungssystem nach einem der Ansprüche 1 bis 3, **dadurch gekennzeichnet, dass** der ersten Tank (10) in ein erstes Segment (12) und ein zweites Segment (14) unterteilt ist, wobei zwischen dem ersten Segment (12) und dem zweiten Segment (14) ein Ventil (15), insbesondere ein Rückschlagventil (16) angeordnet ist, welches ein Strömen des Mediums (11) aus dem zweiten Segment (14) in das erste Segment (12) unterbindet.

5. Abgasnachbehandlungssystem nach Anspruch 4, **dadurch gekennzeichnet, dass** am zweiten Segment (14) des ersten Tanks (10) ein Druckversorgungsventil (18) angeordnet ist, mit dem das zweite Segment (14) des ersten Tanks (10) unter Druck gesetzt wird.

6. Abgasnachbehandlungssystem nach einem der Ansprüche 1 bis 5, **dadurch gekennzeichnet, dass** das Medium aus dem ersten Tank (10) in den zweiten Tank (20) strömt, wenn die Druckzuführmittel (40) die Zufuhr des Hilfsfluids (31) zum zweiten Tank (20) sperren.

7. Abgasnachbehandlungssystem nach Anspruch 1, **dadurch gekennzeichnet, dass** in einem ersten Betriebszustand eine Eindosierung des Mediums (11) aus einer ersten Kammer (27) des zweiten Tanks (20) mittels des unter Druck stehenden Hilfsfluids (31) erfolgt, während eine zweite Kammer (28) des zweiten Tanks (20) aus dem ersten Tank (10) mit dem Medium (11) befüllt wird und dass in einem zweiten Betriebszustand eine Eindosierung des Mediums (11) aus der zweiten Kammer (28) des zweiten Tanks (20) mittels des unter Druck stehenden Hilfsfluids (31) erfolgt, während die erste Kammer (27) des zweiten Tanks (20) aus dem ersten Tank (10) mit dem Medium (11) befüllt wird.

8. Abgasnachbehandlungssystem nach einem der Ansprüche 1 bis 7, **dadurch gekennzeichnet, dass** zwischen dem zweiten Tank (20) und dem Abgasstrang (90) eine Mischkammer (55) zur Vermischung von dem Medium (11) und dem Hilfsfluid (31) angeordnet ist.

9. Verfahren zum Eindosieren eines Mediums (11) in einen Abgasstrang (48) einer Brennkraftmaschine, mit einem ersten Tank (10) und einem damit verbundenen zweiten Tank (20) zur Aufnahme des Mediums (11), wobei das Medium (11) im zweiten Tank (20) mittels eines unter Druck stehenden Hilfsfluids (31) aus dem zweiten Tank (20) in den Abgasstrang (48) eindosiert wird, und wobei der zweite Tank (20) nach Unterschreiten eines vorgegebenen Füllstands aus dem ersten Tank (10) befüllt wird, **dadurch gekennzeichnet, dass** an dem zweiten Tank (20) mindestens zwei getrennte Kammern (27,28) ausgebildet sind, welche durch das Hilfsfluid (31) unter Druck gesetzt werden.

## Claims

1. Exhaust-gas aftertreatment system for dosing a medium (11), in particular liquid urea solution or fuel, into the exhaust tract (90) of an internal combustion engine (100), having a first tank (10) and a second tank (20), connected to said first tank, for accommodating the medium (11), wherein pressure feed means (40) are provided which, by means of a pressurized auxiliary fluid (31), pressurize the medium (11) in the second tank (20) such that the medium (11) is dosed from the second tank (20) into the exhaust tract (90), and wherein detection means (50) are provided which check whether the medium (11) in the second tank (20) falls below a predefined fill level, and wherein filling means (60) are provided which fill the second tank (20) from the first tank (10) in a manner dependent on the result of the check by the detection means (50), **characterized in that** at least two separate chambers (27, 28) are formed in the second tank (20).

2. Exhaust-gas aftertreatment system according to Claim 1, **characterized in that** the pressure feed means (40) pressurize at least two of the separate chambers (27, 28) of the second tank (20) independently of one another by way of the auxiliary fluid (31).

3. Exhaust-gas aftertreatment system according to either of Claims 1 and 2, **characterized in that**, on each chamber (27, 28) of the second tank, there is arranged in each case a pressure feed valve (21, 22) for the auxiliary fluid (31), an inlet valve (23, 24) for the medium (11) and an outlet valve (25, 26) for the medium.

4. Exhaust-gas aftertreatment system according to one of Claims 1 to 3, **characterized in that** the first tank (10) is divided into a first segment (12) and a second segment (14), wherein, between the first segment (12) and the second segment (14), there is arranged a valve (15), in particular a check valve (16), which prevents a flow of the medium (11) from the second segment (14) into the first segment (12).

5. Exhaust-gas aftertreatment system according to Claim 4, **characterized in that**, on the second segment (14) of the first tank (10), there is arranged a pressure supply valve (18) by way of which the second segment (14) of the first tank (10) is pressurized.

6. Exhaust-gas aftertreatment system according to one of Claims 1 to 5, **characterized in that** the medium flows from the first tank (10) into the second tank (20) when the pressure feed means (40) block the feed of auxiliary fluid (31) to the second tank (20).

7. Exhaust-gas aftertreatment system according to Claim 1, **characterized in that**, in a first operating state, dosing of the medium (11) is performed from a first chamber (27) of the second tank (20) by means of the pressurized auxiliary fluid (31) while a second chamber (28) of the second tank (20) is filled with the medium (11) from the first tank (10), and **in that**, in a second operating state, dosing of the medium (11) is performed from the second chamber (28) of the second tank (20) by means of the pressurized auxiliary fluid (31) while the first chamber (27) of the second tank (20) is filled with the medium (11) from the first tank (10).

8. Exhaust-gas aftertreatment system according to one of Claims 1 to 7, **characterized in that** a mixing chamber (55) for mixing the medium (11) and the auxiliary fluid (31) is arranged between the second tank (20) and the exhaust tract (90).

9. Method for dosing a medium (11) into an exhaust tract (48) of an internal combustion engine, having a first tank (10) and a second tank (20), connected to said first tank, for accommodating the medium (11), wherein the medium (11) in the second tank (20) is dosed into the exhaust tract (48) from the second tank (20) by means of a pressurized auxiliary fluid (31), and wherein the second tank (20) is filled from the first tank (10) after a predefined fill level is undershot, **characterized in that** at least two separate chambers (27, 28) are formed in the second tank (20), said chambers being pressurized by way of the auxiliary fluid (31).

## Revendications

1. Système de post-traitement de gaz d'échappement pour l'injection de manière dosée d'un milieu (11), en particulier d'une solution d'urée fluide ou de carburant, dans la ligne d'échappement (90) d'un moteur à combustion interne (100), comprenant un premier réservoir (10) et un deuxième réservoir (20) connecté à celui-ci pour recevoir le milieu (11), des moyens d'apport de pression (40) étant prévus, lesquels sollicitent en pression le milieu (11) dans le deuxième réservoir (20) au moyen d'un fluide auxiliaire (31) pressurisé, de telle sorte que le milieu (11) soit injecté de manière dosée à partir du deuxième réservoir (20) dans la ligne d'échappement (90), et des moyens de détection (50) étant prévus, lesquels vérifient si le milieu (11) dans le deuxième réservoir (20) devient inférieur à un niveau de remplissage prédéfini, et des moyens de remplissage (60) étant prévus, lesquels remplissent le deuxième réservoir (20) à partir du premier réservoir (10) en fonction du résultat de la vérification des moyens de détection (50), **caractérisé en ce qu'**au moins deux chambres séparées (27, 28) sont réalisées au niveau du deuxième réservoir (20).

2. Système de post-traitement de gaz d'échappement selon la revendication 1, **caractérisé en ce que** les moyens d'apport de pression (40) mettent au moins deux des chambres séparées (27, 28) du deuxième réservoir (20) sous pression indépendamment l'une de l'autre par le biais du fluide auxiliaire (31).

3. Système de post-traitement de gaz d'échappement selon l'une quelconque des revendications 1 ou 2, **caractérisé en ce qu'**au niveau de chaque chambre (27, 28) du deuxième réservoir sont à chaque fois disposées une soupape d'apport de pression (21, 22) pour le fluide auxiliaire (31), une soupape d'entrée (23, 24) pour le milieu (11) et une soupape de sortie (25, 26) pour le milieu.

4. Système de post-traitement de gaz d'échappement selon l'une quelconque des revendications 1 à 3, **caractérisé en ce que** le premier réservoir (10) est divisé en un premier segment (12) et un deuxième segment (14), une soupape (15), en particulier un clapet anti-retour (16), étant disposée entre le premier segment (12) et le deuxième segment (14), laquelle supprime un écoulement du milieu (11) à partir du deuxième segment (14) dans le premier segment (12).

5. Système de post-traitement de gaz d'échappement selon la revendication 4, **caractérisé en ce qu'**une soupape d'alimentation en pression (18) est disposée au niveau du deuxième segment (14) du premier réservoir (10), avec laquelle le deuxième segment (14) du premier réservoir (10) est mis sous pression.

6. Système de post-traitement de gaz d'échappement selon l'une quelconque des revendications 1 à 5, **caractérisé en ce que** le milieu s'écoule du premier réservoir (10) dans le deuxième réservoir (20) lorsque les moyens d'apport de pression (40) bloquent l'alimentation du fluide auxiliaire (31) vers le deuxième réservoir (20).

7. Système de post-traitement de gaz d'échappement selon la revendication 1, **caractérisé en ce que** dans un premier état de fonctionnement, une injection de manière dosée du milieu (11) depuis une première chambre (27) du deuxième réservoir (20) se produit au moyen du fluide auxiliaire (31) pressurisé tandis qu'une deuxième chambre (28) du deuxième réservoir (20) est remplie avec le milieu (11) à partir du premier réservoir (10) et **en ce que** dans un deuxième état de fonctionnement, une injection de manière dosée du milieu (11) depuis la deuxième chambre (28) du deuxième réservoir (20) a lieu au moyen du fluide auxiliaire (31) pressurisé, tandis que la première chambre (27) du deuxième réservoir (20) est remplie avec le milieu (11) à partir du premier réservoir (10).

8. Système de post-traitement de gaz d'échappement selon l'une quelconque des revendications 1 à 7, **caractérisé en ce qu'**entre le deuxième réservoir (20) et la ligne d'échappement (90) est disposée une chambre de mélange (55) pour mélanger le milieu (11) et le fluide auxiliaire (31).

9. Procédé pour l'injection de manière dosée d'un milieu (11) dans une ligne d'échappement (48) d'un moteur à combustion interne, comprenant un premier réservoir (10) et un deuxième réservoir (20) connecté à celui-ci pour recevoir le milieu (11), le milieu (11) dans le deuxième réservoir (20) étant injecté de manière dosée à partir du deuxième réservoir (20) dans la ligne d'échappement (48) au moyen d'un fluide auxiliaire (31) pressurisé, et le deuxième réservoir (20), en dessous d'un niveau de remplissage prédéterminé, étant rempli à partir du premier réservoir (10), **caractérisé en ce qu'**au moins deux chambres séparées (27, 28) sont réalisées au niveau du deuxième réservoir (20), lesquelles sont mises sous pression par le fluide auxiliaire (31).
